(19) Europäisches Patentamt
European Patent Office
Office européen des brevets

(11) **EP 2 202 481 A1**

(12) **EUROPEAN PATENT APPLICATION**
published in accordance with Art. 153(4) EPC

(43) Date of publication:
**30.06.2010 Bulletin 2010/26**

(51) Int Cl.:
**G01B 15/02** (2006.01)

(21) Application number: **08840347.2**

(22) Date of filing: **25.09.2008**

(86) International application number:
**PCT/JP2008/067297**

(87) International publication number:
**WO 2009/050993 (23.04.2009 Gazette 2009/17)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.10.2007 JP 2007269171**

(71) Applicant: **Aisin Seiki Kabushiki Kaisha Kariya-shi, Aichi 448-8650 (JP)**

(72) Inventor: **OHTAKE, Hideyuki Kariya-shi Aichi 448-8650 (JP)**

(74) Representative: **TBK-Patent Bavariaring 4-6 80336 München (DE)**

(54) **NON-CONTACT FILM THICKNESS MEASUREMENT METHOD AND DEVICE**

(57) To provide noncontact film thickness measurement method and device in which the adjustment of optical system can be easily adjusted.

The noncontact film thickness measurement device is **characterized in that** the device includes an ultra short light pulse light source 1 generating a repetitive ultra short light pulse laser Lo, of which wavelength is in an area from visible region to near-infrared region, a light dividing means for dividing the ultra short light pulse laser Lo into a pump light Lpu and a probe light Lpr, a light retarding means 3 for controlling to retard the time of either one of the pump light Lpu and the probe light Lpr, a terahertz wave pulse generating means 4 for generating a terahertz wave pulse Lt by inputting the pump light Lpu and generating the terahertz wave pulse Lt in a coaxial direction relative to a remaining pump light outputted without being used for generation of the terahertz wave pulse in the pump light Lpu, a light incident optical system 5 for inputting the terahertz wave pulse Lt to an object 20 of which film thickness is to be measured, a light receiving optical system 6 for receiving a terahertz echo pulse Lte reflected from the object 20 of which film thickness is to be measured by inputting the terahertz wave pulse Lt and a detecting means 7 for detecting an electric field amplitude time resolved wave form of a terahertz echo pulse Lte with the probe light Lpr.

Fig.1

EP 2 202 481 A1

**Description**

TECHNICAL FIELD

This invention relates to a method and a device for measuring thickness of a film coated on a substrate. In more detail, this invention relates to a method and a device for measuring a film thickness using a noncontact technique by irradiating a film thickness measurement object with a terahertz wave.

BACKGROUND OF THE TECHNOLOGY

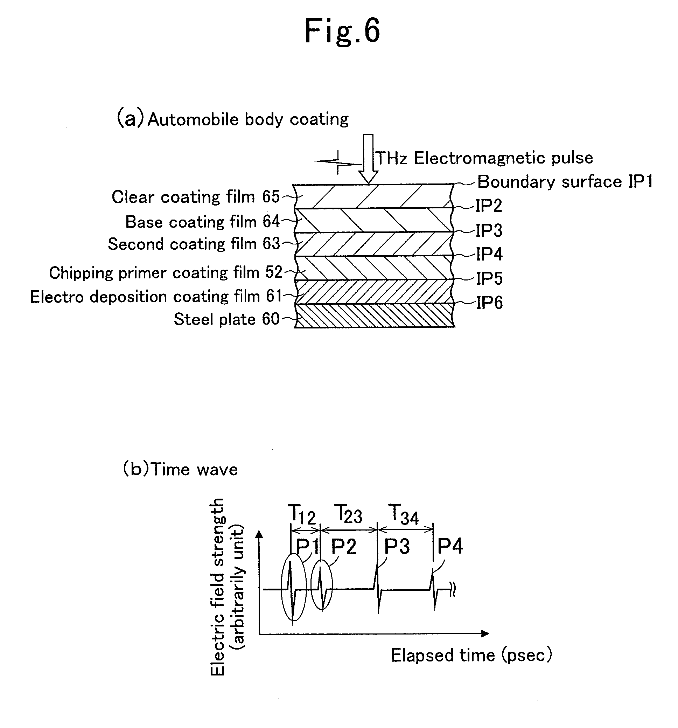

Most of the industrial products, such as automobiles or household electric appliances, are coated for preventing corrosion of the base material (substrate) or improving an esthetic appearance of the products. For example, in case of an automobile with a metallic coating, as shown in Fig. 6(a), an electro deposition coating film 61 is provided on an underlying steel plate 60 for corrosion prevention purpose and a chipping primer coating film 62 is provided on the electro deposition coating film for protecting against stepping stones. Further thereon, a second coating film 63 is provided and after a base coating film 64 including pigment and flake pigment is coated thereon, a clear coating film 65 without pigment and flake pigment is formed. The electro deposition coating film 61 is formed to prevent corrosion of the underlying base and the chipping primer coating film 62 is formed to prevent possible damages which may be caused by a stepping stone or the like. Accordingly, if the thickness of any film drops below a predetermined value, anti-corrosion function or damage protection function may be impaired. Therefore, a strict controlling of the film thickness is necessary for these films by measurement. Further, the second coating film 63, the base coating film 64 and the clear coating film 65 are closely associated with the outer appearance qualities (such as, color, metallic feeling or impression, glossiness, orange peel or deepness). And accordingly, the thickness of these films is also strictly controlled by measurement.

Conventionally, thickness of every film is measured by contacting an eddy current film thickness meter with the film to be measured after dried. Accordingly, such conventional measurement of film thickness using the eddy current type film thickness meter may damage the industrial products and a problem has been raised for this conventional measurement method, in which the thickness of each film layer of the multi-layered film can not be measured.

Recently, in order to solve the above problem in the conventional eddy current type film thickness meter, a device has been developed in which the film thickness is measured using a non-contact technique by irradiating the film thickness measurement object with a terahertz wave.

(Refer to, for example, Patent Document 1)

The terahertz wave is an electromagnetic wave having a wavelength of 30 to 3000$\mu$m (frequency of 0.1 to 10THz) and is transmissive through coating film, the main component of which is high molecular material. Accordingly, as shown in Fig. 6(a), when the terahertz wave pulse enters into the film thickness measurement object formed with a multilayered film, Fresnel reflection occurs at each boundary surface IP1 to IP5 which constitute refractive index discontinuity surface thereby obtaining a reflection terahertz pulse (terahertz echo pulse). The electric field amplitude time resolved wave form of the terahertz echo pulse is schematically shown in Fig. 6(b). Film thickness of each coating film can be obtained from the following equation by using time of flight method based on a time difference $T_{12}$ between the echo pulses P1 and P2, a time difference $T_{23}$ between the echo pulses P2 and P3 and a time difference $T_{34}$ between the echo pulses P3 and P4, from the respective two adjacent boundary surfaces.

$$\text{Film thickness= (time difference} \times \text{light speed)/(coating film group refractive index)..(1)}$$

Patent Document 1: JA 2004-28618 A (pages 6 to 7, Fig. 1 and Fig. 6)

DISCLOSURE OF INVENTION

PROBLEMS TO BE SOLVED

A complex optical system as shown in Fig. 1 of Patent Document 1 has to be formed in order to measure the film thickness in non-contact manner by irradiating the object to be measured with a terahertz wave pulse to obtain a terahertz echo pulse. In other words, the object, of which film thickness is to be measured, has to be light-collected and irradiated with the terahertz wave pulse generated from the terahertz wave pulse generating means and a detecting means is light-collected and irradiated with the terahertz echo pulse reflected from the object to be measured. However, the terahertz wave pulse has a wavelength of 30 to 3000μm as explained above and accordingly is an invisible wave. An enormous time has been consumed to adjust the optical system. Particularly, if the object to be measured has a nonplanar surface, a reflecting direction of terahertz echo pulse can not be predictable, such time for adjusting the optical system has been consuming.

The present invention was made in consideration with the above problems and the object of the invention is to provide a noncontact film thickness measurement method and the device therefor which can easily adjust the optical system.

MEANS FOR SOLVING THE PROBLEM

The noncontact film thickness measurement method of this invention made for solving the above problem is characterized in that the method includes a dividing step for dividing a repetitive ultra short light pulse laser, of which wavelength is in an area from visible region to near-infrared region, into a pump light and a probe light, a light retarding step for controlling to retard the time of either one of the pump light and the probe light divided at the dividing step, a terahertz wave pulse generating step for generating a terahertz wave pulse by inputting the pump light divided at the dividing step to a terahertz wave pulse generating means and generating the terahertz wave pulse in a coaxial direction relative to a remaining pump light outputted from the terahertz wave pulse generating means without being used for generation of the terahertz wave pulse in the pump light and a detecting step for detecting an electric field amplitude time resolved wave form of a terahertz echo pulse with the probe light divided at the dividing step by inputting the terahertz wave pulse generated at the terahertz wave pulse generating step to an object of which film thickness is to be measured and by inputting the terahertz echo pulse reflected from the object of which film thickness is to be measured to a detecting means.

In the step for generating a terahertz wave pulse, the pump light is inputted to the terahertz wave pulse generating means and the terahertz wave pulse is generated in a coaxial direction with the remaining pump light which has been outputted from the terahertz wave pulse generating means and has not been used for generation of the terahertz wave pulse in the pump light. Accordingly, since the wavelength of the pump light is in the area from the visible region to the near-infrared region, the light pass from the terahertz wave generating means to the object of which film thickness is to be measured and the light pass from the object of which film thickness is to be measured to the detecting means can be easily adjusted (easy alignment of optical system).

Another noncontact film thickness measurement method of this invention made for solving the above problem is characterized in that the method includes a dividing step for dividing a repetitive ultra short light pulse laser into a pump light and a probe light, a light retarding step for controlling to retard the time of either one of the pump light and the probe light divided at the dividing step, a terahertz wave pulse generating step for generating a terahertz wave pulse by inputting the pump light divided at the dividing step to a terahertz wave pulse generating means and generating the terahertz wave pulse in a coaxial direction relative to a remaining pump light outputted from the terahertz wave pulse generating means without being used for generation of the terahertz wave pulse in the pump light and a detecting step for detecting an electric field amplitude time resolved wave form of a terahertz echo pulse with the probe light divided at the dividing step by inputting the terahertz wave pulse generated at the terahertz wave pulse generating step to an object of which film thickness is to be measured and by inputting the terahertz echo pulse reflected from the object of which film thickness is to be measured to a photoconductive switch.

In the step for generating a terahertz wave pulse, the pump light is inputted to the terahertz wave pulse generating means and the terahertz wave pulse is generated in a coaxial direction with the remaining pump light which has been outputted from the terahertz wave pulse generating means and has not been used for generation of the terahertz wave pulse in the pump light. Accordingly, the terahertz echo pulse, reflected from an object of which film thickness is to be measured, is overlapped with the pump light. When the electric field amplitude time resolved wave form of the terahertz echo pulse is detected by a photoconductive switch, the electric field amplitude time resolved wave form receives DC bias by the pump light, when the terahertz echo pulse is overlapped with the pump light. Thus, the optimal adjustment for the optical system can be achieved by maximizing the value of DC bias.

The noncontact film thickness measurement device of this invention made for solving the above problem is characterized in that the device includes an ultra short light pulse light source generating a repetitive ultra short light pulse laser, of which wavelength is in an area from visible region to near-infrared region, a light dividing means for dividing the ultra short light pulse generated by the ultra short light pulse light source into a pump light and a probe light, a light retarding means for controlling to retard the time of either one of the pump light and the probe light divided at the light dividing means, a terahertz wave pulse generating means for generating a terahertz wave pulse by inputting the pump light divided at the light dividing means and generating the terahertz wave pulse in a coaxial direction relative to a remaining pump light outputted without being used for generation of the terahertz wave pulse in the pump light, a light incident optical system for inputting the terahertz wave pulse generated at the terahertz wave pulse generating means to an object of which film thickness is to be measured, a light receiving optical system for receiving a terahertz echo pulse reflected from the object of which film thickness is to be measured by inputting the terahertz wave pulse to the object of which film thickness is to be measured in the light incident optical system and a detecting means for detecting an electric field amplitude time resolved wave form of the terahertz echo pulse received at the light receiving optical system with the probe light divided at the light dividing means.

The terahertz wave pulse generating means generates the terahertz wave pulse by inputting the pump light thereto and the terahertz wave pulse is generated in a coaxial direction with the remaining pump light, which has been outputted from the terahertz wave pulse generating means and has not been used for generation of the terahertz wave pulse in the pump light. Accordingly, since the wavelength of the pump light is in the area from the visible region to the near-infrared region, the light pass from the terahertz wave generating means to the object of which film thickness is to be measured and the light pass from the object of which film thickness is to be measured to the detecting means can be easily adjusted (easy alignment of light incident and receiving optical systems).

Another noncontact film thickness measurement device of this invention made for solving the above problem is characterized in that the device includes an ultra short light pulse light source generating a repetitive ultra short light pulse laser, a light dividing means for dividing the ultra short light pulse light generated by the ultra short light pulse light source into a pump light and a probe light, a light retarding means for controlling to retard the time of either one of the pump light and the probe light divided at the light dividing means, a terahertz wave pulse generating means for generating a terahertz wave pulse by inputting the pump light divided at the light dividing means and generating the terahertz wave pulse in a coaxial direction relative to a remaining pump light outputted without being used for generation of the terahertz wave pulse in the pump light, a light incident optical system for inputting the terahertz wave pulse generated at the terahertz wave pulse generating means to an object of which film thickness is to be measured, a light receiving optical system for receiving a terahertz echo pulse reflected from the object of which film thickness is to be measured by inputting the terahertz wave pulse to the object of which film thickness is to be measured with the light incident optical system and a photoconductive switch for detecting an electric field amplitude time resolved wave form of the terahertz echo pulse received with the light receiving optical system with the probe light divided at the light dividing means.

Since the pump light and the terahertz wave pulse are emitted from the terahertz wave generating means in a coaxial direction, the terahertz echo pulse, reflected from an object of which film thickens is to be measured, is overlapped with the pump light. When the electric field amplitude time resolved wave form of the terahertz echo pulse is detected by the photoconductive switch, the electric field amplitude time resolved wave form receives DC bias by the pump light, when the terahertz echo pulse is overlapped with the pump light. Thus, the optimal adjustment for the light incident optical system and the light receiving optical system can be achieved by maximizing the value of DC bias.

Further, in the noncontact film thickness measurement device, preferably an optical switch is provided behind the terahertz wave generating means for ON/OFF controlling the remaining pump light.

The light incident optical system and the light receiving optical system are adjusted to maximize the DC bias by turning the pump light ON by the optical switch. After the adjustment of the optical systems, in the film thickness measurement, the electric field amplitude time resolved wave form of the terahertz echo pulse can be detected with a high accuracy by resetting the DC bias to zero by turning the pump light OFF by the optical switch.

THE EFFECTS OF THE INVENTION

In the step for generating a terahertz wave pulse, the pump light is inputted to the terahertz wave pulse generating means and the terahertz wave pulse is generated in a coaxial direction with the remaining pump light which have been outputted from the terahertz wave pulse generating means and have not been used for generation of the terahertz wave pulse in the pump light. Accordingly, since the wavelength of the pump light is in the area between the visible region and near-infrared region, the light pass from the terahertz wave generating means to the object of which film thickness is to be measured and the light pass from the object of which film thickness is to be measured to the detecting means can be easily adjusted (easy alignment of optical system).

BRIEF EXPLANATION OF ATTACHED DRAWINGS

Fig. 1 indicates a block diagram constituting a noncontact film thickness measurement device according to a first embodiment of the invention.

Fig. 2 indicates a block diagram constituting the noncontact film thickness measurement, wherein the light retarding means of Fig. 1 is provided in a light pass of the pump light.

Fig. 3 indicates a block diagram constituting a noncontact film thickness measurement device according to a second embodiment of the invention.

Fig. 4 is a view illustrating the electric field amplitude time resolved wave form and Fig. 4 (a) showing the wave form without use of Ge filter and Fig. 4(b) showing the wave form with Ge filter used.

Fig. 5 indicates a block diagram constituting a noncontact film thickness measurement device according to a third embodiment of the invention.

Fig. 6 indicates a film thickness measurement principle based on a conventional technology, wherein

Fig. 6 (a) shows a cross sectional view illustrating an example of multilayered coating film in automobile body coating and Fig. 6 (b) shows the electric field amplitude time resolved wave form indicating the terahertz echo pulse measured in the example of Fig. 6 (a).

EXPLANATION OF REFERENCE NUMERALS

Numeral 1; ultra short light pulse light source, numeral 2; light dividing means, numeral 3; light retarding means, 4, 4A; terahertz wave generating means, 5; incident optical system, 6; light receiving optical system, 7,7A; detecting means, 18; optical switch, 20; film thickness measurement object, Lo; repetitive ultra short light pulse laser, Lpu; pump light, LApu; remaining pump light, Lpr; probe light, Lt; terahertz wave pulse, Lte; terahertz echo pulse.

THE BEST MODE EMBODIMENTS OF THE INVENTION

The best mode embodiments of the invention will be explained hereinafter with reference to the attached drawings.

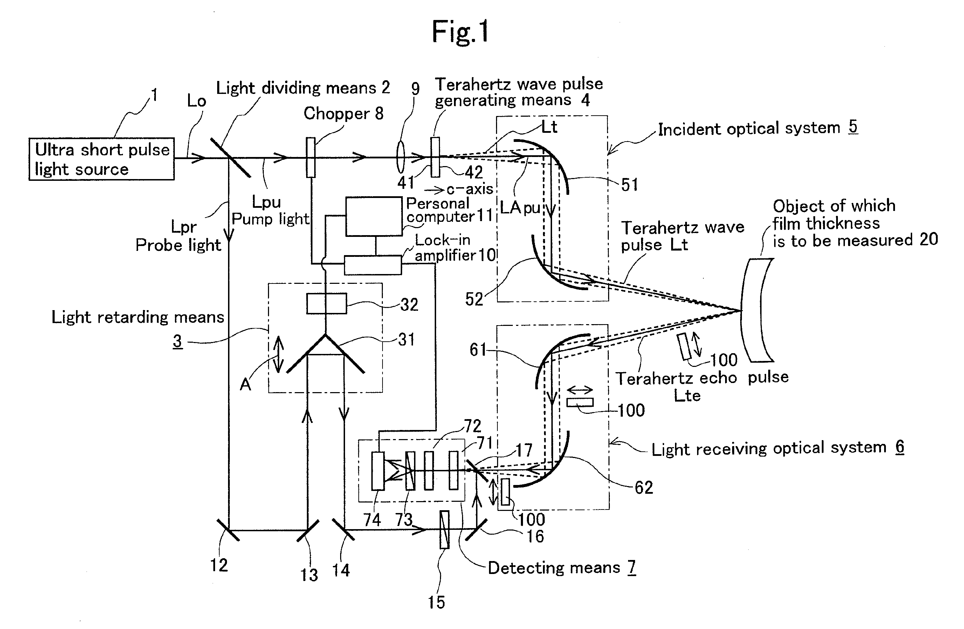

(embodiment 1) Fig. 1 shows a block diagram of a noncontact film thickness measurement device according to the first embodiment of the invention. This measurement device is characterized in that the device includes:

(a) an ultra short light pulse light source 1 for generating a repetitive ultra short light pulse laser the wavelength of which is in the range between visible region and near-infrared region;

(b) a light dividing means 2 for dividing the ultra short light pulse laser Lo generated by the ultra short light pulse light source 1 into a pump light Lpu and a probe light Lpr;

(c) a light retarding means 3 for controlling to retard the time of either the pump light Lpu or the probe light Lpr divided by the light dividing means 2;

(d) a terahertz wave generating means 4 for generating a terahertz wave pulse by inputting the pump light Lpu divided at the light dividing means 3 and generating terahertz wave pulse Lt in a coaxial direction with the remaining pump light which has been outputted from the terahertz wave generating means 4 without being used for generation of the terahertz wave pulse Lt in the pump light Lpu;

(e) an incident optical system 5 for inputting the terahertz wave pulse Lt generated at the terahertz wave generating means 4 to an object 20 of which film thickness is to be measured;

(f) a light receiving optical system 6 receiving the terahertz echo pulse Lte reflected from the object 20 of which film thickness is to be measured to which the terahertz wave pulse Lt has been inputted at the incident optical system 5; and

(g) a detecting means 7 for detecting an electric field amplitude time resolved wave form of the terahertz echo pulse Lte received at the light receiving optical system 6 with the probe light Lpr divided at the light dividing means 2.

The ultra short light pulse light source 1 generates an ultra short light pulse laser Lo with a central wave length of 81 one, a pulse width of 60fs, a repetitive frequency of 87MHz.

The ultra short light pulse laser Lo is not limited to the above specified laser. It may be any type as long as the wavelength is within the region between visible region and near-infrared region. As will be explained later, if the wavelength is within a visible region, you can look with your eyes and accordingly the optical system of the film thickness measurement device can be adjustable in a short time using the pump light as a guiding light. Further, even in the near-infrared (far-red light) region, the light can be visualized using a CCD camera or IR fluorescence plate and again the optical system of the film thickness measurement device can be adjustable in a short time using the pump light as a guiding light. In detail, as shown in Fig. 1, the CCD camera (IR fluorescence plate) 100 is placed between the object 20 of which film thickness is to be measured and off-axis paraboloidal mirror 61, between the off-axis paraboloidal mirror 61 and another paraboloidal mirror 62 and between the off-axis paraboloidal mirror 62 and the beam coupler 17 to adjust the optical system. It is noted that in case the CCD camera is used, numeral 100 designates a screen and the CCD camera takes an image of the pump light reflected on the screen.

It is preferable to set the pulse width in the range between 1fs and 1 ps.

The light dividing means 2 is a beam splitter and divides the ultra short light pulse laser Lo into the pump light Lpu and the probe light Lpr.

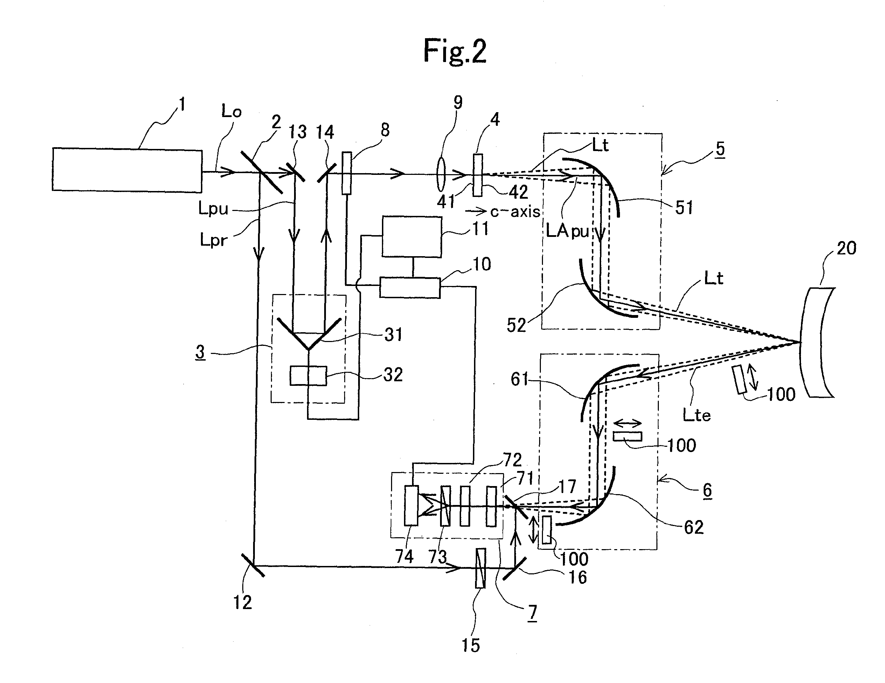

The light retarding means 3 is provided with an intersecting mirror 31 and a transfer mechanism 32 transferring in the arrow "A "direction. This light retarding means 3 advances or retards the time of probe light Lpr relative to a terahertz wave pulse Lt generated by pumping operation of the later explained pump light Lpu. The transfer mechanism 32 is controlled by a personal computer 11. According to this embodiment, the light retarding means 3 is disposed in the light pass of the probe light. However, as seen in Fig. 2, it may be provided in the light pass of the pump light.

The terahertz wave pulse generating means 4 is made of organic non-linear crystal DAST (4-dimethylamino-N-methyl-4stilbazobazolium tosylate). The DAST crystal 4 has two surfaces 41, 42 which vertically intersect c-axis. The distance between two surfaces 41, 42 (thickness of the DAST crystal) is 0.1 mm. When the DAST crystal 4 is irradiated with the pump light Lpu, a terahertz wave pulse is generated with the crystal $\chi^2$ effect and the remaining pump light which has not been consumed for the pulse generation is emitted. At that time, as shown in Fig. 1, when the pump light Lpu is vertically inputted onto the surface 41, the pump light Lpu penetrates through the crystal 4 in the c axis direction and the generated terahertz wave pulse advances in a coaxial direction with the pump light LApu which has not been used at the terahertz wave pulse generation.

The incident optical system 5 includes two off-axis paraboloidal mirrors 51 and 52. One 51 of the two off-axis paraboloidal mirrors collimates the terahertz wave pulse Lt radiated in a coaxial direction with the pump light LApu from the DAST crystal 4 and the other 52 of the off-axis paraboloidal mirrors collects the light and irradiates the object 20 of which film thickness is to be measured with a collimated terahertz wave pulse Lt.

The light receiving optical system 6 includes two off-axis paraboloidal mirrors 61 and 62. One 61 of the two off-axis paraboloidal mirrors collimates the terahertz echo pulse Lte from the object 20 of which film thickness is to be measured and the other 62 of the off-axis paraboloidal mirrors collects the light and irradiates the detecting means 7 with a collimated terahertz echo pulse Lte.

The detecting means 7 includes an electro optical crystal 71, a quarter wavelength plate 72, analyzer 73 and a balance detector 74.

The electro optical crystal 71 rotates polarized light of the probe light Lpr by an optical electric field induced by irradiation of the terahertz echo pulse Lte.

The quarter wavelength plate 72 randomly rotates the rotation of polarized light of the probe light Lpr generated by the birefringence induced by the electro optical crystal plate 71 by the terahertz echo pulse Lte.

The balance detector 74 extracts and trace detects the rotation amount of polarized light of the probe light Lpr generated by the birefringence induced by the electro optical crystal plate 71 by the terahertz echo pulse Lte using differential amplifier mechanism.

Numeral 10 designates a lock-in amplifier extracting the component synchronized with modulated signal of the chopper 8 from the signals detected at the balance detector 74 and amplifying the extracted component.

Numeral 11 designates personal computer recording the position information of the light retarding means 3 and the signals from the lock-in amplifier 10. The personal computer 11 also has functions to control the transfer mechanism 32 of the light retarding means 3 and the lock-in amplifier 10.

Next, the operation of the noncontact film thickness measurement device will be explained hereinafter.

First, the ultra short light pulse laser Lo generated by the ultra short light pulse light source 1 is devided into the pump light Lpu and the probe light Lpr through the beam splitter 2.

After intensity-modulated, the pump light Lpu is collected and irradiated in c-axis direction of DAST crystal 4 through lens 9. Then the terahertz wave pulse is generated with the crystal $\chi^2$ effect and the remaining pump light which has not been consumed for the pulse generation is emitted. At that time, as shown in Fig. 1, when the pump light Lpu is vertically inputted onto the surface 41, the pump light Lpu penetrates through the crystal 4 in the c-axis direction and the generated terahertz wave pulse Lt advances in a coaxial direction with the pump light LApu which has not been used at the terahertz wave pulse generation. In other words, the terahertz wave pulse Lt advances with the pump light LApu being overlapped.

The terahertz wave pulse Lt radiated in the coaxial direction with the pump light LApu is collimated at the off-axis paraboloidal mirror 51 and then collected and irradiated on the object 20 of which film thickness is to be measured through another off-axis paraboloidal mirror 52. Thereafter, the terahertz wave pulse is reflected from different refractive index boundary surface of the object 20 of which film thickness is to be measured to radiate the terahertz echo pulse Lte.

The terahertz echo pulse Lte radiated from the object 20 of which film thickness is to be measured is collimated at the off-axis paraboloidal mirror 61 and then collected and irradiated on the electro optical crystal plate 71 through the off-axis paraboloidal mirror 62.

On the other hand, the probe light Lpr advances through mirrors 12 and 13 and then is time-retarded or advanced at the light retarding means 3. Thereafter, the probe light Lpr is linearly polarized at the polarizer 15 through a mirror 14 and then at the beam coupler 17 overlapped with the terahertz echo pulse Lte through mirror 16.

The probe light Lpr receives birefringence by the terahertz echo pulse Lte only when the terahertz echo pulse Lte and the probe light Lpr are overlapped in terms of time in the electro optical crystal plate 71, whereby linearly polarized probe light Lpr is elliptically polarized. The birefringence amount is proportional to the intensity of the terahertz echo pulse Lte. The probe light Lpr with birefringence is given a phase difference of $\pi/2$ between s-polarization and p-polarization by the quarter wavelength plate 72 and inputted to the analyzer 73. The analyzer 73 then divides the inputted probe light Lpr into p-polarization and s-polarization and inputs them to the balance detector 74. The balance detector 74 outputs an electric signal to the lock-in amplifier 10. The output electric signal is proportional to the intensity difference between the light signals of the above two polarized light components. The electric signal here means the birefringence amount of the probe light Lpr which is affected by the electro optical effect by the terahertz echo pulse Lte and this birefringence amount is proportional to the light intensity of the terahertz echo pulse Lte. The probe light Lpr is retarded in terms of time and the electric signal is inputted to the personal computer 11 to obtain the electric field amplitude time resolved wave form of the terahertz echo pulse as shown in Fig. 6(b).

Next, adjustment of optical system of the noncontact film thickness measurement device will be explained hereinafter.

The noncontact film thickness measurement device according to this embodiment is formed by many optical elements as shown in Fig. 1 and if the adjustment is lenient, light loss is accumulated and in worst case, the terahertz echo pulse Lte does not reach to the detecting means 7. Normally, the adjustment of the optical system is performed through monitoring light using a transmitting light. However, since the terahertz wave is an electromagnetic wave of which wavelength is in the area between the infrared region and far-infrared region, monitoring such light can not be made. However, according to the noncontact film thickness measurement device of this embodiment, the terahertz wave pulse Lt and the pump light LApu are radiated in a coaxial direction from the terahertz wave pulse generating means and since the pump light LApu has a wavelength of 810nm which is a visible light and the optical system can be adjusted monitoring the pump light LApu.

(1) First a white paper is inserted immediately before the off-axis paraboloidal mirror 51 and angle and position of the off-axis paraboloidal mirror 51 are adjusted, confirming the position of the pump light LApu. Next, a white paper is inserted between the off-axis paraboloidal mirrors 51 and 52 and the off-axis paraboloidal mirror 51 is adjusted so that the pump light LApu becomes collimated by monitoring the light flux.

(2) Next, a white paper is provided immediately before the object 20 of which film thickness is to be measured and the off-axis paraboloidal mirror 52 is adjusted so that the irradiating position of the pump light LApu is placed at a predetermined position of the object 20 of which film thickness is to be measured the focal point of the off-axis paraboloidal mirror 52 agrees with the outer surface of the object 20 of which film thickness is to be measured by monitoring the pump light LApu.

(3) Next, a white paper is inserted between the off-axis paraboloidal mirrors 61 and 62 and the off-axis paraboloidal mirror 61 is adjusted so that the pump light LApu becomes collimated by monitoring the light flux.

(4) Next, a white paper is placed immediately before the electro optical crystal plate 71 and the off-axis paraboloidal mirror 62 is adjusted so that the irradiating position of the pump light LApu agrees with the center of the electro optical crystal plate 71 and the focal point of the off-axis paraboloidal mirror 62 agrees with the outer surface of the electro optical crystal plate 71.

Thus the adjustment is performed and the pump light LApu outputted from the terahertz wave pulse generating means 4 is efficiently inputted to the electro optical crystal plate 71. Since the terahertz wave pulse Lt radiated from the terahertz wave pulse generating means 4 is radiated in coaxial with the pump light LApu, the terahertz wave pulse Lt passes through the same light pass with the pump light LApu and collected and irradiated on the object 20 of which film thickness is to be measured and the terahertz echo pulse Lte also passes through the same light pass with the pump light LApu and collected and irradiated on the electro optical crystal plate 71.

When the object 20 of which film thickness is to be measured is moved in order to measure a film thickness of different portion of the object 20, if the surface is non-plane, the reflection direction of the terahertz echo pulse Lte is changed. In such case by repeatedly performing the above adjustment items from (3), the terahertz echo pulse Lte is efficiently received and detected.

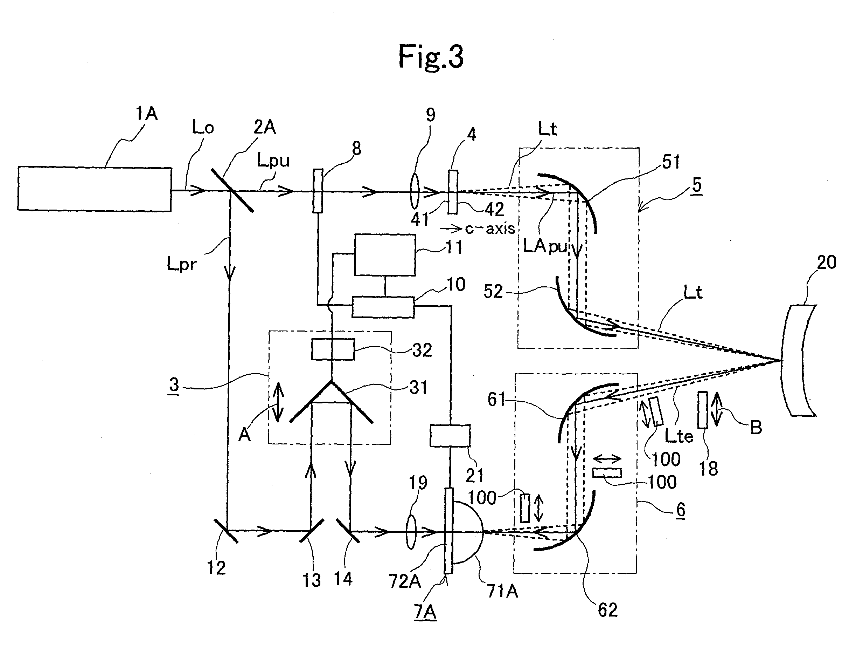

(Embodiment 2) Fig. 3 shows a block diagram of the structure of noncontact film thickness measurement device according to the embodiment 2 of the invention. The structure is substantially the same with that of embodiment 1 and same reference numerals are placed on the same structure and the explanations thereof are omitted. Big difference is the structure of detecting means. In the first embodiment, the electro optical crystal plate is the main component of the detecting means whereas the detecting means of this second embodiment includes a photoconductive switch as the main component.

In Fig. 3, numeral 7A designates the detecting means and the detecting means 7A includes a silicon lens 71A and a photoconductive switch 72A. The photoconductive switch 72A is a type of dipole antenna formed on a low temperature growth GaAs substrate. The dipole antenna gap portion is excited by the probe light Lpr and to which the terahertz echo pulse Lte is inputted to obtain the electric field amplitude time resolved wave form.

The ultra short light pulse light source 1A generates ultra short light pulse laser Lo having a fundamental wave pulse of pulse width of 17fs, a repetitive frequency of 50MHz and a central wavelength of 1550nm and a second harmonic wave pulse of 780nm wavelength.

Numeral 2A designates a dichroic mirror which divides the ultra short light pulse laser Lo into the pump light Lpu of which wavelength is 1550nm and the probe light Lpr with the wavelength of 780nm.

The optical switch 18 is a Ge filter which cuts the pump LApu with wavelength of 1550nm and is transmissive through the terahertz echo pulse and includes a movable mechanism (not shown) movable in the B arrow direction.

Numeral 19 designates a lens collecting the probe light Lpr with the wavelength of 780nm and irradiating the dipole antenna gap of the photoconductive switch 72A with the probe light Lpr.

Numeral 21 designates an amplifier amplifying an electric signal from the photoconductive switch 72A.

Next, the operation of the noncontact film thickness measurement device according to this embodiment will be explained.

The output of pump light Lpu is 100mW and this output is modulated when passing through the chopper 8. The modulation at the chopper 8 is generally earlier made if the output is equal to or less than one tenth of the laser repetitive frequency generated at the ultra short light pulse light source 1A. This time, the modulation was made with the output of 1kH of the pump light Lpu. The modulated pump light Lpu is collected to DAST crystal 4 by the lens 9. The terahertz wave pulse Lt outputted from the DAST crystal 4 is collected to the object 20 of which film thickness is to be measured at the incident optical system 5. At the same time the remaining pump light LApu passed through the DAST crystal 4 and not used for generation of the terahertz wave pulse is also collected to the object 20 of which film thickness is to be measured. The power of the remaining pump light LApu passed through the DAST crystal 4 is about 40mW and about 40 % of the pump light Lpu remains without being converted into the terahertz wave pulse. The terahertz echo pulse Lte reflected at the object 20 of which film thickness is to be measured is collected to the photoconductive switch 72A through the silicon lens 71A in the light receiving optical system 6. At this time, the remaining pump light LApu advancing in coaxial with the terahertz echo pulse Lte is also collected to the photoconductive switch 72A.

On the other hand, the probe light Lpr divided at the dichroic mirror 2A is collected to the photoconductive switch 72A via light retarding means 3 by the lens 19. Through scanning of the light retarding means 3, the electric field amplitude time resolved wave form of the terahertz echo pulse Lte is measured. The signal from the photoconductive switch 72A passes through the amplifier 21 and inputted to the lock-in amplifier 10. The signal data is accumulated and displayed at the personal computer 11. When the light retarding means 3 exhibits a rapid scanning type, the data in personal computer is synchronized to the delay sweep cycle, thereby obtaining the data with high speed.

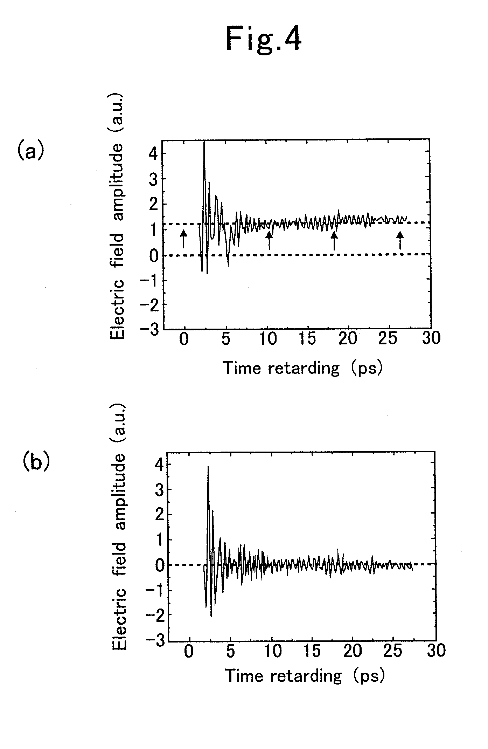

Fig. 4 (a) indicates the electric field amplitude time resolved wave form of the terahertz echo pulse Lte when the Ge filter 18 is not inserted into the light pass and Fig. 4 (b) indicates the electric field amplitude time resolved wave form of the terahertz echo pulse Lte when the Ge filter 18 is inserted into the light pass, respectively.

This indicates that the DC component increases irrespective of time with ON/OFF of the optical switch 18, i.e., Ge filter insertion or not. The DC component indicates the bias derived from the remaining pump light LApu effect.

Next, the adjustment of the optical system for the noncontact film thickness measurement device will be explained. According to the noncontact film thickness measurement device of this embodiment, the terahertz wave pulse Lt is also radiated in coaxial with the pump light LApu emitted from the terahertz wave pulse generating means. However, since the wavelength of the pump light LApu is in an infrared ray area with 1550nm, the optical system can not be adjusted by monitoring the pump light LApu.

However, when the remaining pump light LApu is inputted to the photoconductive switch 72A, DC bias derived from the pump light LApu is applied on the electric field amplitude time resolved wave form. Accordingly, the optimum adjustment can be achieved by adjusting the incident and receiving optical systems 5 and 6 to have the maximum DC bias. Accordingly, according to this embodiment, the incident and receiving optical systems 5 and 6 are adjusted so that the DC bias becomes its maximum value.

It is noted that when measuring the film thickness of the object, preferably the remaining pump light LApu is cut by inserting the filter 18. Without cutting the pump light LApu, the electric field amplitude time resolved wave form leaves the dynamic range and the peak position measurement accuracy may be reduced.

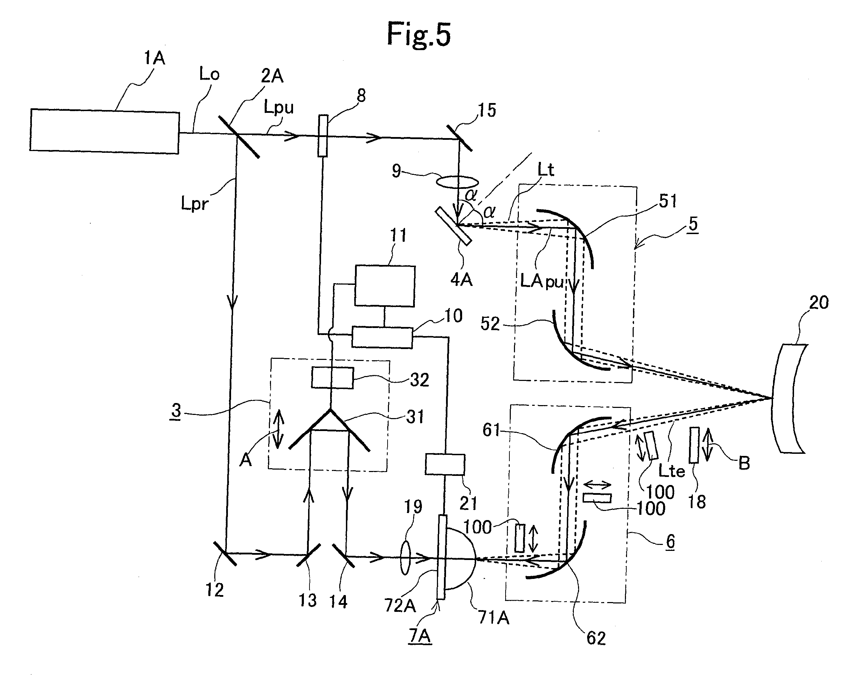

(Embodiment 3) Fig. 5 shows a block diagram of the structure of noncontact film thickness measurement device according to the embodiment 3. The structure is substantially the same with that of embodiment 2 and same reference numerals are placed on the same structure and the explanations thereof are omitted. Big difference is the structure of terahertz wave generating means. In the second embodiment, the pump light is inputted to the organic non-linear crystal DAST in the c-axis direction and the terahertz wave pulse is generated in coaxial with the pump light which have not been consumed for terahertz wave pulse generation with the crystal $\chi^2$ effects. In other words, the terahertz wave generating means of the second embodiment is transmissive disposed, organic non-linear crystal detecting means, whereas the terahertz wave generating means of this embodiment is reflectively disposed, semiconductor crystal.

The terahertz wave generating means 4A is for example, made by InAs semiconductor crystal. When the pump light Lpu is collected at the lens 9 and inputted with incident angle $\alpha$ (in this embodiment, $\alpha = 45°$), a portion of the pump light is consumed for generation of the terahertz wave pulse by the light Dember effect and the remaining pump light LApu is reflected in a mirror reflection direction relative to the reflection angle $\alpha$. The terahertz wave pulse Lt is radiated coaxially with the pump light LApu.

The semiconductor crystal is not limited to the InAs, but it may be InSb, InP, InGaAs, or InAlAs.

Next, the adjustment of the optical system of the noncontact film thickness measurement device will be explained. According to the noncontact film thickness measurement device of this embodiment, the terahertz wave pulse Lt is also radiated in coaxial with the pump light LApu emitted from the terahertz wave pulse generating means. However, since the wavelength of the pump light LApu is in an infrared ray area with 1550nm, the optical system can not be adjusted by monitoring the pump light LApu.

However, as explained in the embodiment 2, when the remaining pump light LApu is inputted to the photoconductive switch 72A, DC bias derived from the pump light LApu is applied on the electric field amplitude time resolved wave form. Accordingly, according to this embodiment, the incident and receiving optical systems 5 and 6 are adjusted so that the DC bias becomes its maximum value.

**Claims**

1.  A noncontact film thickness measurement method, comprising:

    a dividing step for dividing a repetitive ultra short light pulse laser, of which wavelength is in an area from visible region to near-infrared region, into a pump light and a probe light;
    a light retarding step for controlling to retard the time of either one of the pump light and the probe light divided at the dividing step;
    a terahertz wave pulse generating step for generating a terahertz wave pulse by inputting the pump light divided at the dividing step to a terahertz wave pulse generating means and generating the terahertz wave pulse in a coaxial direction relative to a remaining pump light outputted from the terahertz wave pulse generating means without being used for generation of the terahertz wave pulse in the pump light; and
    a detecting step for detecting an electric field amplitude time resolved wave form of a terahertz echo pulse with the probe light divided at the dividing step by inputting the terahertz wave pulse generated at the terahertz wave pulse generating step to an object of which film thickness is to be measured and by inputting the terahertz echo pulse reflected from the object of which film thickness is to be measured to a detecting means.

2.  A noncontact film thickness measurement method, comprising:

    a dividing step for dividing a repetitive ultra short light pulse laser into a pump light and a probe light; a light retarding step for controlling to retard the time of either one of the pump light and the probe light divided at the dividing step;
    a terahertz wave pulse generating step for generating a terahertz wave pulse by inputting the pump light divided at the dividing step to a terahertz wave pulse generating means and generating the terahertz wave pulse in a coaxial direction relative to a remaining pump light outputted from the terahertz wave pulse generating means without being used for generation of the terahertz wave pulse in the pump light; and
    a detecting step for detecting an electric field amplitude time resolved wave form of a terahertz echo pulse with the probe light divided at the dividing step by inputting the terahertz wave pulse generated at the terahertz wave pulse generating step to an object of which film thickness is to be measured and by inputting the terahertz echo pulse reflected from the object of which film thickness is to be measured to a photoconductive switch.

3.  A noncontact film thickness measurement device, comprising:

    an ultra short light pulse light source generating a repetitive ultra short light pulse laser, of which wavelength is in an area from visible region to near-infrared region;
    a light dividing means for dividing the ultra short light pulse generated by the ultra short light pulse light source into a pump light and a probe light;
    a light retarding means for controlling to retard the time of either one of the pump light and the probe light divided at the light dividing means;
    a terahertz wave pulse generating means for generating a terahertz wave pulse by inputting the pump light divided at the light dividing means and generating the terahertz wave pulse in a coaxial direction relative to a remaining pump light outputted without being used for generation of the terahertz wave pulse in the pump light;
    a light incident optical system for inputting the terahertz wave pulse generated at the terahertz wave pulse generating means to an object of which film thickness is to be measured;
    a light receiving optical system for receiving a terahertz echo pulse reflected from the object of which film thickness is to be measured by inputting the terahertz wave pulse to the object of which film thickness is to be measured in the light incident optical system; and

a detecting means for detecting an electric field amplitude time resolved wave from of the terahertz echo pulse received at the light receiving optical system with the probe light derived at the light dividing means.

4. A noncontact film thickness measurement device comprising:

an ultra short light pulse light source generating a repetitive ultra short light pulse laser;

a light dividing means for dividing the ultra short light pulse generated by the ultra short light pulse light source into a pump light and a probe light;

a light retarding means for controlling to retard the time of either one of the pump light and the probe light divided at the light dividing means;

a terahertz wave pulse generating means for generating a terahertz wave pulse by inputting the pump light divided at the light dividing means and generating the terahertz wave pulse in a coaxial direction relative to a remaining pump light outputted without being used for generation of the terahertz wave pulse in the pump light;

a light incident optical system for inputting the terahertz wave pulse generated at the terahertz wave pulse generating means to an object of which film thickness is to be measured;

a light receiving optical system for receiving a terahertz echo pulse reflected from the object of which film thickness is to be measured by inputting the terahertz wave pulse to the object of which film thickness is to be measured in the light incident optical system; and

a photoconductive switch for detecting an electric field amplitude time resolved wave form of the terahertz echo pulse received at the light receiving optical system with the probe light divided at the light dividing means.

5. The noncontact film thickness measurement device according to claim 4, further comprising an optical switch provided behind the terahertz wave generating means for ON/OFF controlling the remaining pump light.

# Fig.1

Ultra short pulse light source $\boxed{1}$

Lo

Light dividing means 2

Chopper 8

9

Terahertz wave pulse generating means 4

Lt

Incident optical system 5

41 42

→c-axis

Personal computer 11

LApu

51

Lpu Pump light

Lpr Probe light

Lock-in amplifier 10

Terahertz wave pulse Lt

Object of which film thickness is to be measured 20

Light retarding means 3

32

31

52

61

Terahertz echo pulse Lte

100

100

A

72 71

17

Light receiving optical system 6

62

74 73

15

100

16

Detecting means 7

12

13 14

EP 2 202 481 A1

# Fig.2

Fig.3

# Fig.4

(a)

(b)

# Fig.5

EP 2 202 481 A1

# Fig.6

(a) Automobile body coating

THz Electromagnetic pulse

Boundary surface IP1

Clear coating film 65 —— IP2

Base coating film 64 —— IP3

Second coating film 63 —— IP4

Chipping primer coating film 52 —— IP5

Electro deposition coating film 61 —— IP6

Steel plate 60

(b) Time wave

Electric field strength (arbitrarily unit)

$T_{12}$  $T_{23}$  $T_{34}$

P1  P2  P3  P4

Elapsed time (psec)

## INTERNATIONAL SEARCH REPORT

| International application No. |
| --- |
| PCT/JP2008/067297 |

A.   CLASSIFICATION OF SUBJECT MATTER
*G01B15/02*(2006.01)i

According to International Patent Classification (IPC) or to both national classification and IPC

B.   FIELDS SEARCHED

Minimum documentation searched (classification system followed by classification symbols)
G01B11/00-11/30, G01B15/00-15/08, G01N21/00-22/04

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | JP 2004-28618 A  (Osaka Industrial Promotion Organization 29 January, 2004 (29.01.04), Full text; all drawings (Family: none) | 1-5 |
| A | JP 2002-303574 A  (Tochigi Nikon Corp.), 18 October, 2002 (18.10.02), Full text; all drawings & WO 2002/082060 A1 | 1-5 |
| A | JP 2004-317573 A  (Riken, Japan), 11 November, 2004 (11.11.04), Full text; all drawings & WO 2004/092788 A1      & US 2006/0268945 A1 & EP 1621902 A1 | 1-5 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 01 December, 2008 (01.12.08) | Date of mailing of the international search report 09 December, 2008 (09.12.08) |
| --- | --- |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/067297

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-129732 A  (Tochigi Nikon Corp.), 19 May, 2005 (19.05.05), Full text; all drawings (Family: none) | 1-5 |

Form PCT/ISA/210 (continuation of second sheet) (April 2007)

**EP 2 202 481 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004028618 A